# EUROPÄISCHE PATENTSCHRIFT

(11) **EP 2 679 545 B1**
(45) Veröffentlichungstag und Bekanntmachung des Hinweises auf die Patenterteilung: **13.12.2017**
(21) Anmeldenummer: 13170970.1
(22) Anmeldetag: 07.06.2013
(51) Int. Cl.: C02F 1/00

(54) **Wasserreinigung Maschine**
water purification machine
Machine de traitement de l'eau

(30) Priorität: 26.06.2012 DE 102012210830
(43) Veröffentlichungstag der Anmeldung: 01.01.2014
(73) Patentinhaber: WMF Württembergische Metallwarenfabrik Aktiengesellschaft, 73312 Geislingen/Steige (DE)
(72) Erfinder: Boerner, Cornelius, 73329 Kuchen (DE); Köhler, Claudia, 16547 Birkenwerder (DE); Wilms-Haverkamp, Irmy, 32051 Herford (DE)
(74) Vertreter: BRP Renaud & Partner mbB Rechtsanwälte Patentanwälte Steuerberater

(56) Entgegenhaltungen:
- EP-A2- 1 442 689
- WO-A2-03/011088
- DE-U1-202007 019 085
- GB-A- 2 392 373
- US-A1- 2006 162 806
- US-A1- 2006 169 629
- US-B1- 6 202 541

## Beschreibung

Die vorliegende Erfindung betrifft eine Vorrichtung zur Wasserreinigung gemäß dem Oberbegriff des Anspruchs 1.

Durch eine zunehmende Umweltverschmutzung und ein zunehmend gestiegenes Umweltbewusstsein rücken sogenannte Tischwasserfilter zunehmend in den Fokus des Betrachters, wobei derartige Tischwasserfilter dazu benutzt werden, das Leitungswasser vordem Trinken nochmals zu filtern bzw. zu reinigen. Derartige Tischwasserfilter werden dabei bereits seit über 40 Jahren angeboten und bestehen in der Regel aus einem Außenbehälter mit einem Volumen von ca. 2-4 Litern sowie einem in diesen Außenbehälter eingehängten Innenbehälter mit ungefähr dem halben Volumen. An einer Unterseite, das heißt in einem Bodenbereich, des eingehängten Innenbehälters befindet sich dabei ein Auslauf mit eingesetztem und austauschbarem Filterelement. Das zu reinigende Wasser wird dabei zunächst durch eine Einfüllöffnung innerhalb eines aufgesetzten Deckels in den Innenbehälter eingefüllt und durchfließt anschließend innerhalb einiger Minuten das eingesetzte Filterelement, welches mit Filtergranulat unterschiedlicher Zusammensetzungen gefüllt sowie oft mit zusätzlichen Grob- und Feinfiltern ausgestattet ist. Nachdem das in den Innenbehälter gefüllte Wasser den Filter bzw. das Filterelement durchflossen hat, wird es im Außenbehälter aufgefangen und kann über eine entsprechende Öffnung, beispielsweise eine Schnaupe, ausgegossen werden.

In der WO 03/011088 A1 ist eine Vorrichtung zur Wasserreinigung beschrieben. Diese Vorrichtung weist einen Außenbehälter sowie einen Innenbehälter auf, der im Außenbehälter aufgenommen ist. Eine im Innenbehälter angeordnete Pumpe erlaubt das Pumpen von Wasser aus dem Innenbehälter in den Außenbehälter.

Dabei erfolgt das Absaugen von Wasser aus dem Innenbehälter über ein erstes Ventil, während das Pumpen des Wassers in den Außenbehälter über ein zweites Ventil erfolgt.

Aus der EP 10442 689 A2 ist eine Vorrichtung zur Wasserreinigung bekannt, die einen in einem Außenbehälter angeordneten Innenbehälter aufweist, wobei am Innenbehälter ein schwenkbarer Deckel zum Verschließen des Innenbehälters angebracht ist.

Die DE 20 2007 019 085 U1 zeigt eine Vorrichtung zur Wasserreinigung, wobei an einem Behälter bodenseitig ein Sitz für eine Filterkartusche vorgesehen ist.

Eine weitere Vorrichtung zur Wasserreinigung ist aus der US 6 202 541 B1 bekannt.
Nachteilig bei derart bekannten Tischwasserfiltern ist jedoch, dass die Menge des gefilterten Wassers nur ungefähr der Hälfte des Gesamtvolumens des Außenbehälters, das heißt des Tischwasserfilters entspricht und die Vorrichtung zudem schwierig Hand zu haben ist.

Die vorliegende Erfindung beschäftigt sich deshalb mit dem Problem, für eine gattungsgemäße Vorrichtung zur Wasserreinigung, insbesondere für ein sogenanntes Tischwasserfilter, eine verbesserte Ausführungsform anzugeben, bei welcher ein deutlich vergrößertes Volumen für das gereinigte bzw. gefilterte Wasser genutzt werden kann und die die Handhabung vereinfacht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Vorrichtung zur Wasserreinigung, insbesondere bei einem sogenannten Tischwasserfilter, mit einem Außenbehälter, einem Deckel zum Verschließen des Außenbehälters und mit einem in den Außenbehälter einsetzbaren Innenbehälter, der bodenseitig ein Filter aufweist, an diesem Innenbehälter erfindungsgemäß ein Ventil anzuordnen, das in geschlossenem Zustand den Innenbehälter nach unten dicht verschließt. Dies bietet den großen Vorteil, dass der Innenbehälter der Vorrichtung aus dem Außenbehälter entnommen und separat mit Wasser befüllt werden kann, ohne dass dieses zunächst in unerwünschter Weise unten aus dem Innenbehälter abfließt. Der Innenbehälter kann also unter einem Wasserhahn befüllt und anschließend ohne zu tropfen zur Vorrichtung getragen werden. Hierdurch kann die Handhabung der Vorrichtung deutlich vereinfacht werden. Der Innenbehälter kann dabei auch als normaler Flüssigkeitsbehälter genutzt werden, da er bei geschlossenem Ventil flüssigkeitsdicht verschlossen ist, so dass beispielsweise mit dem Innenbehälter auch eine Aufbewahrung von Flüssigkeiten, insbesondere von Wasser in einem Kühlschrank, erfolgen kann.

Erfindungsgemäß sind im Deckel eine Durchgangsöffnung sowie ein erstes Steuerelement vorgesehen, wobei das erste Steuerelement bei auf dem Deckel aufgesetztem Innenbehälter das Ventil am Innenbehälter öffnet und dadurch ein Austreten des im Innenbehälter gespeicherten Wassers durch das Filter und durch die Durchgangsöffnung im Deckel in den darunter angeordneten Außenbehälter ermöglicht. Das am Innenbehälter angeordnete Ventil ermöglicht somit das separate Befüllen des Innenbehälters in entnommenem Zustand, so dass der Innenbehälter ohne zu tropfen auf den den Außenbehälter abschließenden Deckel aufgesetzt werden kann. Durch das am Deckel angeordnete Steuerelement wird das am Innenbehälter angeordnete Ventil automatisch und selbstständig geöffnet, sofern der Innenbehälter lagerichtig auf den Deckel des Außenbehälters aufgesetzt wird. Nach dem Aufsetzen des Innenbehälters auf den Außenbehälter fließt das zu reinigende Wasser aus dem Innenbehälter durch das Filter und die Durchgangsöffnung im Deckel in den darunter liegenden Außenbehälter, wobei zum vollständigen Füllen des Außenbehälters der Innenbehälter wieder abgenommen und unter einem Wasserhahn erneut befüllt werden kann. Von großem Vorteil bei der erfindungsgemäßen Vorrichtung ist dabei, dass im Vergleich zu aus dem Stand der Technik bekannten Vorrichtungen nunmehr das gesamte Volumen des Außenbehälters und nicht wie bisher lediglich das halbe Volumen des Außenbehälters für gefiltertes Wasser zur Verfügung steht. Rein theoretisch ist selbstverständlich zusätzlich oder alternativ zu dem am Deckel angeordneten Steuerelement auch eine Schalteinrichtung denkbar, mittels welcher das Ventil unabhängig vom Steuerelement, insbesondere manuell, geöffnet und geschlossen werden kann.

Erfindungsgemäß ist innen am Boden des Außenbehälters ein zweites Steuerelement angeordnet, das bei in den Außenbehälter eingesetztem Innenbehälter das Ventil des Innenbehälters öffnet und dadurch ein Austreten des im Innenbehälter gespeicherten Wassers durch das Filter in den Außenbehälter ermöglicht. Auch bei dieser vorteilhaften Ausführungsform sind zunächst ein Entnehmen des Innenbehälters aus dem Außenbehälter der Vorrichtung zur Wasserreinigung sowie ein separates Befüllen desselben unter einem Wasserhahn möglich. Bei einem Transport des Innenbehälters vom Wasserhahn zum Außenbehälter ist das Ventil geschlossen, so dass keine Flüssigkeit verloren geht. Wird nun der Innenbehälter in den Außenbehälter eingesetzt, bewirkt das am Boden des Außenbehälters angeordnete zweite Steuerelement das automatische Öffnen des am Innenbehälter angeordneten Ventils, woraufhin das im Innenbehälter angeordnete Wasser durch das Filter in den Außenbehälter abfließt und von dort, beispielsweise über eine Schnaupe, in Gläser abgefüllt werden kann. Die Funktionsweise des Innenbehälters im Außenbehälter ist dabei ähnlich wie bei aus dem Stand der Technik bekannten Tischwasserfiltern, mit dem großen Vorteil, dass der Innenbehälter aus dem Außenbehälter entnehmbar und an separater Stelle mit Flüssigkeit befüllbar ist, ohne dass ein Auslaufen der im Innenbehälter eingefüllten Flüssigkeit, beispielsweise Wasser, zu befürchten ist.

Zweckmäßig ist am Deckel eine Haltekontur vorgesehen, die ein passgenaues Aufsetzen des Innenbehälters auf den Deckel erzwingt und zwar so, dass das erste Steuerelement mit dem Ventil des aufgesetzten Innenbehälters zusammenwirkt und zudem die Durchgangsöffnung unter dem Innenbehälter liegt und dadurch ein Austreten des im Innenbehälter gespeicherten Wassers durch das Filter in den Außenbehälter ermöglicht. Eine derartige Haltekontur erleichtert nicht nur ein lagegenaues Positionieren des Innenbehälters auf dem Außenbehälter, sondern sichert zudem auch den auf dem Außenbehälter abgestellten Innenbehälter vor einem unerwünschten Abrutschen. Eine derartige Haltekontur kann beispielsweise in der Art eines nach oben abstehenden Kragens ausgebildet sein, der mit einem komplementär dazu ausgebildeten Kragen am Innenbehälter zusammenwirkt. Eine derartige Haltekontur ist selbstverständlich lediglich rein optional vorzusehen, so dass ein Deckel mit einer einfachen Durchgangsöffnung und einem entsprechenden Steuerelement zur Durchführung der Erfindung ausreichend ist, wobei rein theoretisch auch dieses Steuerelement die Haltefunktion übernehmen kann.

Generell kann der erfindungsgemäße Innenbehälter auch auf andere Gefäße als den Außenbehälter aufgesetzt werden, wobei dann das Ventil mittels der zuvor beschriebenen Schalteinrichtung manuell geöffnet werden muss. Am Außenbehälter bzw. am weiteren Gefäß befindet sich zur besseren Handhabung üblicherweise ein Griff.

Die vorliegende Erfindung beruht weiter auf dem allgemeinen Gedanken, eine Vorrichtung zur Wasserreinigung mit einem ersten Behälter sowie mit einem darauf aufsetzbaren zweiten Behälter anzugeben, der bodenseitig ein Filter und ein Ventil aufweist, das im geschlossenem Zustand den zweiten Behälter abdichtet und wobei der erste Behälter oder ein Teil von diesem, beispielsweise eine Innenkontur, bei aufgesetztem zweiten Behälter das Ventil des zweiten Behälters öffnet und dadurch ein Austreten des im zweiten Behälter gespeicherten Wassers durch das Filter in dem ersten Behälter ermöglicht. Ein derartiger erster Behälter kann beispielsweise in der Art einer Wasserkaraffe ausgebildet sein. Weist auch hier das Ventil am zweiten Behälter eine Schalteinrichtung zum manuellen Öffnen bzw. Schließen des Ventils auf, so kann der zweite Behälter generell auch auf beliebige Behälter bzw. Gefäße aufgesetzt werden. Bei der erfindungsgemäßen Ausführungsform ist das das Ventil am zweiten Behälter öffnende Steuerelement somit durch den ersten Behälter bzw. einen Teil davon, beispielsweise einen Rand desselben, gegeben.

Eine Benutzung der erfindungsgemäßen Vorrichtung erfolgt dabei wie folgt: Zunächst wird der zweite Behälter mit zu reinigendem Wasser befüllt, beispielsweise unter einem Wasserhahn. Anschließend wird der zweite Behälter auf den ersten Behälter aufgesetzt, wobei sich beim Aufsetzen das Ventil am zweiten Behälter öffnet und dadurch das Austreten des im zweiten Behälter gespeicherten und noch nicht gefilterten Wassers durch das Filter in den ersten Behälter ermöglicht wird. Auch hier kann das gesamte Volumen des zweiten Behälters komplett genutzt werden. Zum Ausschenken des gefilterten Wassers aus dem ersten Behälter muss zunächst der zweite Behälter wieder von dem ersten Behälter abgezogen werden, wobei dabei das Ventil automatisch geschlossen wird. Abgelegt bzw. abgesetzt werden kann der zweite Behälter beispielsweise auf einem Ständer, der jedoch derart ausgebildet ist, dass ein Aufsetzen des zweiten Behälters auf dem Ständer kein unerwünschtes Öffnen des Ventils am zweiten Behälter bewirkt. Der erste Behälter kann nunmehr zur Darreichung von Wasser auf den Tisch gestellt werden.

Das Filter zum Filtern des Wassers kann unterschiedlichste Filtermaterialien, beispielsweise Aktivkohle, Granulate, Siebe oder ein Filterpapier aufweisen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a: eine erfindungsgemäße Vorrichtung mit in einen Außenbehälter integrierten Innenbehälter,
- Fig. 1b: eine Darstellung wie in Fig. 1A, jedoch mit entnommenem Innenbehälter,
- Fig. 1c: eine Darstellung wie in Fig. 1B, jedoch mit auf einen Deckel des Außenbehälters aufgesetztem Innenbehälter,
- Fig. 2a: eine Schnittdarstellung durch die erfindungsgemäße Vorrichtung mit eingesetztem Innenbehälter,
- Fig. 2b: eine Schnittdarstellung durch die erfindungsgemäße Vorrichtung bei auf dem Außenbehälter aufgesetztem Innenbehälter,
- Fig. 2c: eine Schnittdarstellung durch den Innenbehälter mit geschlossenem Ventil,
- Fig. 3: eine weitere mögliche Ausführungsform der erfindungsgemäßen Vorrichtung mit einem als Wasserkaraffe ausgebildeten ersten Behälter.

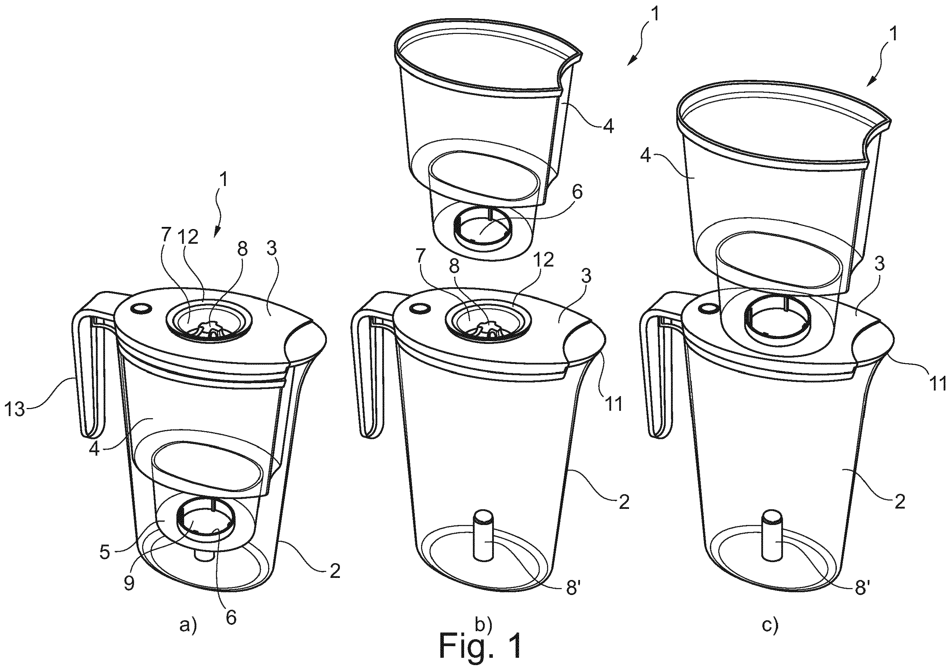

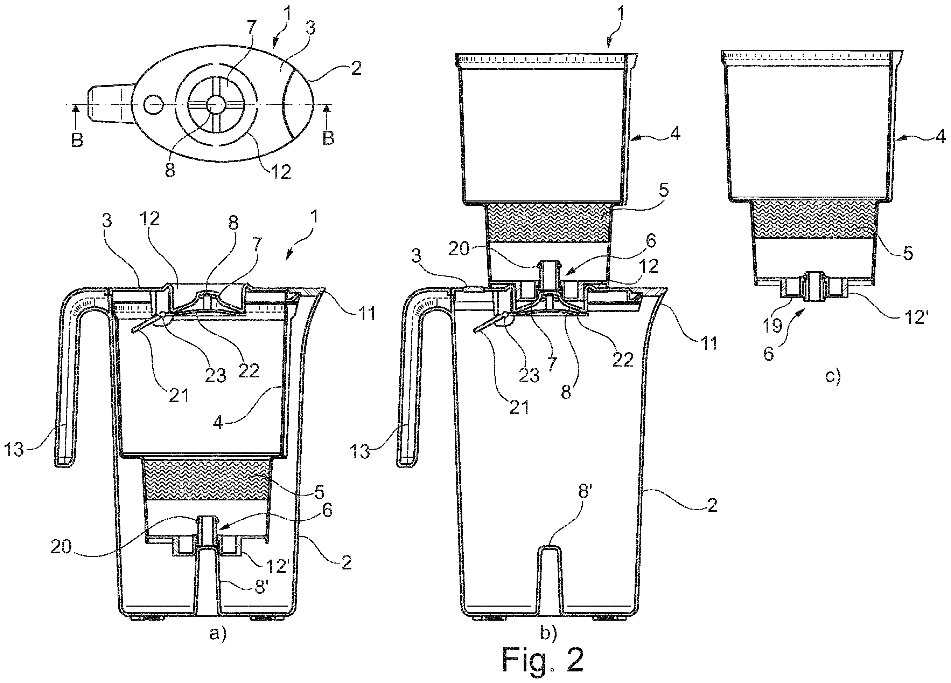

Entsprechend den Figuren 1 und 2, weist eine erfindungsgemäße Vorrichtung 1 zur Wasserreinigung, beispielsweise ein Tischwasserfilter, einen Außenbehälter 2 mit einem Deckel 3 zum Verschließen des Außenbehälters 2 sowie einen in den Außenbehälter 2 einsetzbaren Innenbehälter 4 auf, der bodenseitig ein Filter 5 besitzt. Das Filter 5 kann beispielsweise in der Art einer austauschbaren Filterkartusche ausgebildet. Erfindungsgemäß besitzt nun der Innenbehälter 4 ein bodenseitig angeordnetes Ventil 6, das im geschlossenen Zustand den Innenbehälter 4 abdichtet. Im Deckel 3 sind darüber hinaus eine Durchgangsöffnung 7 sowie ein erstes Steuerelement 8, beispielsweise in der Art eines axial nach oben abstehenden Pins vorgesehen, der insbesondere mit einem Kunststoffüberzug versehen sein kann. Das erste Steuerelement 8 öffnet bei auf den Deckel 3 aufgesetztem Innenbehälter 4 das Ventil 6 am Innenbehälter 4 und ermöglicht dadurch ein Austreten des im Innenbehälter 4 gespeicherten Wassers durch das Filter 5 und die Durchgangsöffnung 7 im Deckel 3 in den Außenbehälter 2. Die erfindungsgemäße Vorrichtung 1, bei welcher der Innenbehälter 4 samt Filter 5 und Ventil 6 aus dem Außenbehälter 2 entnehmbar ist, bietet den großen Vorteil, dass der Innenbehälter 4 separat unter einem Wasserhahn befüllt und tropffrei wieder zum Außenbehälter 2 transportiert werden kann. Anschließend erfolgt ein Aufsetzen des Innenbehälters 4 auf den Deckel 3 des Außenbehälters 2, woraufhin das im Deckel 3 angeordnete Steuerelement 8 das Ventil 6 am Innenbehälter 4 öffnet. Das Ventil 6 kann beispielsweise einen einfachen Ventilkörper 9 aufweisen, der sich aufgrund der Schwerkraft und aufgrund des von oben drückenden Wassers und/oder aufgrund einer von einer Feder 19 ausgeübten Kraft auf einen entsprechenden Ventilsitz 10 (vergleiche Figur 2c) anlegt und dadurch den Innenbehälter 4 abdichtet. Wird nun der Innenbehälter 4 auf den Deckel 3 des Außenbehälters 2 aufgesetzt, so bewirkt das erste Steuerelement 8 ein Hochdrücken des Ventilkörpers 9, woraufhin dieser vom Ventilsitz 10 abhebt und dadurch öffnet. Der Ventilkörper 9 besitzt im gezeichneten Ausführungsbeispiel eine Ringdichtung 20, die zusammen mit dem Ventilsitz 10 die Dichtwirkung erzielt. Bei der erfindungsgemäßen Vorrichtung 1 zur Wasserreinigung kann somit in besonders vorteilhafter Weise das gesamte Volumen des Außenbehälters 2 zur Aufnahme von gereinigtem Wasser genutzt werden.

Das Steuerelement 8 ist fest mit dem Deckel 3 verbunden, um den Wiederstand zu bieten, der zur Betätigung des Ventils 6 erforderlich ist. Die auf der Zeichnung ersichtliche kreuzförmige und durchbrochene Aufhängung des Steuerelements 8 im Deckel 3 dient dazu, eine möglichst große Einfüllöffnung rings um das Steuerelement 8 zu haben im Fall eines konventionellen Einsatzes, das heißt mit dem Innenbehälter 4 innerhalb des Außenbehälters 2.

Zusätzlich kann innen am Boden des Außenbehälters 2 ein zweites Steuerelement 8' vorgesehen sein, das bei in den Außenbehälter 2 eingesetztem Innenbehälter 4 das Ventil 6 des Innenbehälters 4 öffnet und dadurch ein Austreten des im Innenbehälter 4 gespeicherten Wassers durch das Filter 5 in den Außenbehälter 2 ermöglicht. Im Großen und Ganzen ist somit auch eine Benutzung der erfindungsgemäßen Vorrichtung 1 ähnlich derjenigen von bekannten Tischwasserfiltern möglich, mit dem vorteilhaften Unterschied, dass der Innenbehälter 4 zunächst aus dem Außenbehälter 2 entnommen und separat unter einem Wasserhahn befüllt werden kann, ohne dass dabei befürchtet werden muss, dass bei einem Rücktransport des Innenbehälters 4 zum Außenbehälter 2 Flüssigkeit aus dem Innenbehälter 4 austritt. Wird hingegen der Innenbehälter 4 in den Außenbehälter 2 eingesetzt, so bewirkt das am Boden des Außenbehälters 2 angeordnete zweite Steuerelement 8' ein automatisches Öffnen des Ventils 6, woraufhin das im Innenbehälter 4 gespeicherte und nicht gefilterte Wasser nun durch das Filter 5 in den Außenbehälter 2 strömt und von dort beispielsweise über eine Schnaupe 11 ausgegossen werden kann.

Um ein zuverlässiges und insbesondere auch ein sicheres Abstellen des Innenbehälters 4 auf dem Deckel 3 des Außenbehälters 2 zu ermöglichen, kann am Deckel 3 eine Haltekontur 12 vorgesehen sein, die ein passgenaues Aufsetzen des Innenbehälters 4 auf den Deckel 3 erzwingt und zwar so, dass das erste Steuerelement 8 mit dem Ventil 6 des aufgesetzten Innenbehälters 4 zusammenwirkt und zudem die Durchgangsöffnung 7 unter dem Innenbehälter 4 liegt und dadurch ein ungehindertes Austreten des im Innenbehälter 4 gespeicherten Wassers durch das Filter 5 und die Durchgangsöffnung 7 im Deckel 3 in den Außenbehälter 2 ermöglicht. Eine derartige Haltekontur 12 kann beispielsweise aus einem axial abstehenden Kragen gebildet sein, welcher in eine entsprechende Ausnehmung an Innenbehälter 4 eingreift und dadurch eine rutschfeste Fixierung des Innenbehälters 4 auf dem Deckel 3 gewährleistet. An dem Innenbehälter 4 ist somit eine komplementäre Haltekontur 12' angeordnet. Selbstverständlich sind auch sämtliche andere mögliche Ausführungsformen an Haltekonturen vorstellbar, insbesondere Stecklösungen.

In den Fig. 2a,b ist ein Hebel 21 fest mit einer unter der, insbesondere trichterförmigen Durchgangsöffnung 7 erkennbaren und nach innen schwenkenden Abdeckkappe 22 dargestellt. Diese Abdeckkappe 22 hat den Zweck eine Verschmutzung des Wassers von außen zu verhindern. Die Abdeckkappe 22 ist in der Nähe der Hinterkante, also Richtung Griff 13 an einem Drehpunkt 23 gelagert. Über eine auf der Achse befindliche und nicht dargestellte Feder wird die Abdeckkappe 22 von unten an der Innenseite des Deckels 3 gehalten. Beim Einfüllen von Wasser durch die Durchgangsöffnung 7 öffnet der Druck des Wassers diese Abdeckkappe 22 entgegen der Federkraft, nach Ende des Befüllens schwingt die Abdeckkappe 22 Federkraft-unterstützt wieder in die verschließende Ausgangslage zurück. Der angesprochene Hebel 21 dient als Anschlag zur Begrenzung des Öffnungswinkels der Abdeckkappe 22, um zu verhindern, dass das Rückfedern der Abdeckkappe 22 bei einem zu hohen Füllstand behindert wird.

Der Deckel 3 ist vorzugsweise abnehmbar ausgebildet, so dass die Vorrichtung 1 besonders einfach und hygienisch zu reinigen ist. Das Ventil 6 kann als handelsübliches und konstruktiv einfach aufgebautes Rückschlagventil mit einem federbeaufschlagten verstellbaren Ventilkörper 9 ausgebildet sein.

Die Erfindung betrifft jedoch nicht nur eine komplette Vorrichtung 1 mit einem Außenbehälter 2, einem Deckel 3 sowie einem Innenbehälter 4, sondern auch lediglich den Innenbehälter 4 separat mit dem bodenseitig angeordneten Filter 5 und dem ebenfalls bodenseitig angeordneten Ventil 6, das im geschlossenen Zustand den Innenbehälter 4 abdichtet. Denkbar ist somit, dass der Innenbehälter 4, beispielsweise in unterschiedlichsten Farben, über den Zubehörhandel vertrieben wird.

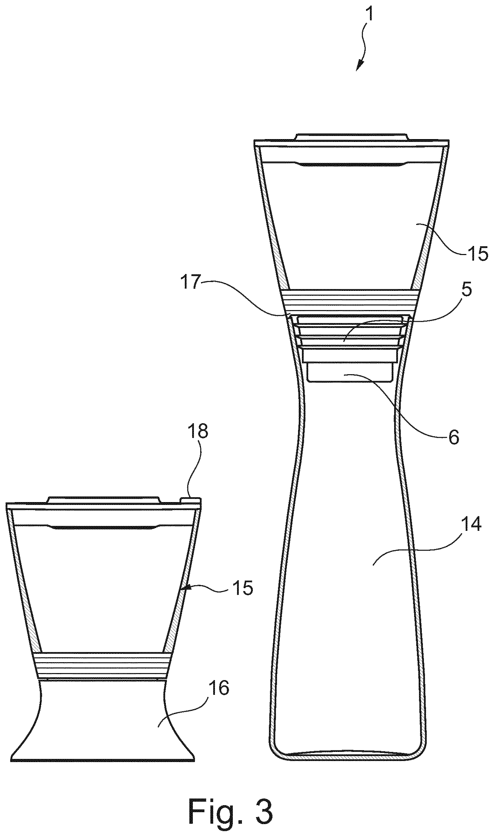

Am Außenbehälter 2 ist darüber hinaus in bekannter Weise ein Griff 13 angeordnet, der die Handhabung der Vorrichtung 1 erleichtert. Betrachtet man die Figur 3, so kann man eine alternative Ausführungsform der erfindungsgemäßen Vorrichtung 1 zur Wasserreinigung erkennen, mit einem ersten Behälter 14 sowie mit einem darauf aufsetzbaren zweiten Behälter 15, der bodenseitig ein Filter 5 und ein Ventil 6 aufweist, das in geschlossenem Zustand den zweiten Behälter 15 abdichtet. Der erste Behälter 14 ist dabei derart ausgebildet, dass dieser oder ein Teil von diesem bei aufgesetztem zweiten Behälter 15 das am zweiten Behälter 15 angeordnete Ventil 6 öffnet und dadurch ein Austreten des im zweiten Behälter 15 gespeicherten Wassers durch das Filter 5 in den ersten Behälter 14 ermöglicht. Der erste Behälter 14 ist dabei in der Art einer herkömmlichen Wasserkaraffe ausgebildet.

Zusätzlich vorgesehen sein kann ein Ständer 16, auf welchem der zweite Behälter 15 derart aufsetzbar ist, dass das Ventil 6 des zweiten Behälters 15 geschlossen bleibt. Zum Befüllen des ersten Behälters 14 mit gereinigtem Wasser wird somit zunächst der zweite Behälter 15 zusammen mit dem Filter 5 vom Ständer 16 abgenommen und beispielsweise unter einem Wasserhahn befüllt. Anschließend wird der zweite Behälter 15 auf den ersten Behälter 14 aufgesetzt, wobei vorzugsweise automatisch das Ventil 6 geöffnet wird und dadurch ein Ausströmen des im zweiten Behälter 15 gespeicherten Wassers durch das Filter 5 in den ersten Behälter 14 erfolgen kann. Ein Öffnen des Ventils 6 kann dabei beispielsweise von einer entsprechenden Innenkontur oder einem Rand 17 des ersten Behälters 14 bewirkt werden.

Allen Ausführungsformen ist dabei gemein, dass eine Schalteinrichtung 18 vorgesehen sein kann, mittels welcher das Ventil 6 unabhängig vom Steuerelement 8, 8' oder vom ersten Behälter 14, insbesondere händisch, geöffnet und geschlossen werden kann. Mit einer derartigen Schalteinrichtung 18 zum manuellen Öffnen bzw. Schließen des Ventils 6 kann der Innenbehälter 4 bzw. der zweite Behälter 15 auch auf beliebigen anderen Gefäßen bzw. Behältern abgestellt werden und durch ein manuelles Öffnen des Ventils 6 ein Abfließen von gefiltertem Wasser in das darunter stehende Gefäß erreicht werden.

Mit der erfindungsgemäßen Vorrichtung 1 ist im Vergleich zu bisher aus dem Stand der Technik bekannten Vorrichtungen insbesondere die komplette Ausnutzung des Volumens des Außenbehälters 2 bzw. des ersten Behälters 14 für die Aufnahme von gereinigtem Wasser möglich, was in dieser Form bisher nicht möglich war. Zugleich kann bei einem Aufbau der erfindungsgemäßen Vorrichtung 1 gemäß den Figuren 1 und 2 auch eine Filtration von Wasser durch Einsetzen des Innenbehälters 4 in den Außenbehälter 2 in gewohnter und altbewährter Weise erzielt werden.

## Patentansprüche

1. Vorrichtung (1) zur Wasserreinigung mit
- einem Außenbehälter (2),
- einem Deckel (3) zum Verschließen des Außenbehälters (2),
- einem Innenbehälter (4), der bodenseitig ein Filter (5) aufweist,
- dass der Innenbehälter (4) ein bodenseitig angeordnetes Ventil (6) aufweist, welches in geschlossenem Zustand den Innenbehälter (4) abdichtet,
**dadurch gekennzeichnet,**
- **dass** der Innenbehälter (4) in den Außenbehälter (2) einsetzbar ist,
- **dass** im Deckel (3) eine Durchgangsöffnung (7) und ein erstes Steuerelement (8) vorgesehen sind, wobei das erste Steuerelement (8) bei auf den Deckel (3) aufgesetztem Innenbehälter (4) das Ventil (6) am Innenbehälter (4) öffnet und dadurch ein Austreten des im Innenbehälter (4) gespeicherten Wassers durch das Filter (5) und die Durchgangsöffnung (7) im Deckel (3) in den Außenbehälter (2) ermöglicht,
- **dass** innen am Boden des Außenbehälters (2) ein zweites Steuerelement (8') angeordnet ist, welches bei in den Außenbehälter (2) eingesetztem Innenbehälter (4) das Ventil (6) des Innenbehälters (4) öffnet und dadurch ein Austreten des im Innenbehälter (4) gespeicherten Wassers durch das Filter (5) in den Außenbehälter (2) ermöglicht.

2. Vorrichtung nach Anspruch 1,
**dadurch gekennzeichnet,**
**dass** am Deckel (3) eine Haltekontur (12) vorgesehen ist, die ein passgenaues Aufsetzen des Innenbehälters (4) auf den Deckel (3) erzwingt und zwar so, dass das erste Steuerelement (8) mit dem Ventil (6) des aufgesetzten Innbehälters (4) zusammenwirkt und zudem die Durchgangsöffnung (7) unter dem Innenbehälter (4) liegt und dadurch ein Austreten des im Innenbehälter (4) gespeicherten Wassers durch das Filter (5) in den Außenbehälter (2) ermöglicht.

3. Vorrichtung nach Anspruch 1 oder 2,
**dadurch gekennzeichnet,**
- **dass** der Deckel (3) abnehmbar ausgebildet ist.

4. Vorrichtung nach einem der Ansprüche 1 bis 3,
**dadurch gekennzeichnet,**
**dass** das Ventil (6) als Rückschlagventil mit einem, insbesondere federvorgespannten, verstellbaren Ventilkörper (9) ausgebildet ist.

5. Vorrichtung nach einem der Ansprüche 1 bis 4,
**dadurch gekennzeichnet,**
**dass** eine Schalteinrichtung (18) vorgesehen ist, mittels welcher das Ventil (6), insbesondere manuell, geöffnet und geschlossen werden kann.

## Claims

1. Device (1) for water purification having:
- an outer container (2),
- a cover (3) for closing the outer container (2),
- an inner container (4), which comprises a filter (5) on the bottom side,
- that the inner container (4) comprises a valve (6) arranged on the bottom side which seals the inner container (4) in the closed position,
**characterised in that**
- the inner container (4) can be installed in the outer container (2),
- a passage opening (7) and a first control element (8) are provided in the cover, wherein the first control element (8) opens the valve (6) on the inner container (4) when the cover (3) is placed on the inner container (4) and thereby an overflow of the water stored in the inner container (4) through the filter (5) and the passage opening (7) in the cover (3) into the outer container (2) is possible,
- a second control element (8') is arranged within the base of the outer container (2) which opens the valve (6) of the inner container (4) when the inner container (4) is installed in the outer container (2) and thereby an overflow of the water stored in the inner container (4) through the filter (5) into the outer container (2) is possible.

2. Device according to claim 1,
**characterised in that**
a retaining contour (12) is provided on the cover (3) which forces an exact placement of the inner container (4) on the cover (3) and that the first control element (8) works with the valve (6) of the placed inner container (4) and moreover the passage opening (7) is under the inner container (4) and thereby an overflow of the water stored in the inner container (4) through the filter (5) into the outer container (2) is possible.

3. Device according to claim 1 or 2,
**characterised in that**
- the cover (3) is detachable.

4. Device according to any one of claims 1 to 3,
**characterised in that**
the valve (6) is a non-return valve with a, in particularly spring-pretensioned, adjustable valve body (9).

5. Device according to any one of claims 1 to 4,
**characterised in that**
a switching mechanism (18) is provided by means of which the valve (6) can be opened and closed, in particularly manually.

## Revendications

1. Dispositif (1) pour le nettoyage de l'eau avec
- un récipient extérieur (2),
- un couvercle (3) pour la fermeture du récipient extérieur (2),
- un récipient intérieur (4) qui présente côté fond un filtre (5),
- que le récipient intérieur (4) présente une soupape (6) agencée côté fond qui rend étanche à l'état fermé le récipient intérieur (4),
**caractérisé en ce**
- **que** le récipient intérieur (4) peut être inséré dans le récipient extérieur (2),
- **que** dans le couvercle (3) une ouverture débouchante (7) et un premier élément de commande (8) sont prévus, dans lequel le premier élément de commande (8) ouvre, en cas de récipient intérieur (4) placé sur le couvercle (3), la soupape (6) au niveau du récipient intérieur (4) et permet ainsi une sortie de l'eau stockée dans le récipient intérieur (4) par le filtre (5) et l'ouverture débouchante (7) dans le couvercle (3) dans le récipient extérieur (2),
- **qu'**à l'intérieur sur le fond du récipient extérieur (2) un second élément de commande (8') est agencé, lequel ouvre, en cas de récipient intérieur (4) inséré dans le récipient extérieur (2), la soupape (6) du récipient intérieur (4) et permet ainsi une sortie de l'eau stockée dans le récipient intérieur (4) par le filtre (5) dans le récipient extérieur (2).

2. Dispositif selon la revendication 1,
**caractérisé en ce**
**qu'**au niveau du couvercle (3) un contour de retenue (12) est prévu, lequel impose un placement précis en ajustement du récipient intérieur (4) sur le couvercle (3) et ce de sorte que le premier élément de commande (8) coopère avec la soupape (6) du récipient intérieur (4) placé et de plus l'ouverture débouchante (7) se trouve sous le récipient intérieur (4) et permette ainsi une sortie de l'eau stockée dans le récipient intérieur (4) par le filtre (5) dans le récipient extérieur (2).

3. Dispositif selon la revendication 1 ou 2,
**caractérisé en ce**
**que** le couvercle (3) est réalisé de manière amovible.

4. Dispositif selon l'une quelconque des revendications 1 à 3,
**caractérisé en ce**
**que** la soupape (6) est réalisée comme un clapet antiretour avec un corps de clapet (9) réglable, en particulier précontraint par ressort.

5. Dispositif selon l'une quelconque des revendications 1 à 4,
**caractérisé en ce**
**qu'**un dispositif de commutation (18) est prévu, au moyen duquel la soupape (6) peut être ouverte et fermée, en particulier manuellement.
